# EUROPÄISCHE PATENTSCHRIFT

(11) **EP 1 509 477 B1**
(45) Veröffentlichungstag und Bekanntmachung des Hinweises auf die Patenterteilung: **02.05.2007**
(21) Anmeldenummer: 03737976.5
(22) Anmeldetag: 27.05.2003
(51) Int. Cl.: C03B 11/02, C03B 11/06, C03B 11/08, C03B 7/14, C03B 40/04

(54) **VORRICHTUNG ZUM BLANKPRESSEN VON GLASKÖRPERN**
DEVICE FOR BLANK PRESSING GLASS BODIES
DISPOSITIF DE MOULAGE PAR PRESSION AVEC FINI DE SURFACE BRILLANT DE CORPS EN VERRE

(30) Priorität: 28.05.2002 DE 10223668
(43) Veröffentlichungstag der Anmeldung: 02.03.2005
(73) Patentinhaber: Schott AG, 55122 Mainz (DE)
(72) Erfinder: BONITZ, Ralf, 55122 Mainz (DE); ADEBAHR, Rainer, 31073 Grünenplan (DE); EBELING, Polina, 55131 Mainz (DE); MOSELER, Doris, 55257 Budenheim (DE); KUNERT, Christian, 55122 Mainz (DE); WEIDMANN, Dirk, 55130 Mainz (DE); REDEY, Matthias, 55288 Spiesheim (DE)
(74) Vertreter: Fuchs Mehler Weiss & Fritzsche
(86) Internationale Anmeldenummer: PCT/EP2003/005540
(87) Internationale Veröffentlichungsnummer: WO 2003/099733

(56) Entgegenhaltungen:
- DE-A- 2 410 923
- US-A- 5 713 975
- US-A- 5 762 673
- US-B1- 6 334 335
- PATENT ABSTRACTS OF JAPAN vol. 018, no. 568 (C-1266), 31. Oktober 1994 (1994-10-31) -& JP 06 206730 A (MINOLTA CAMERA CO LTD), 26. Juli 1994 (1994-07-26)
- PATENT ABSTRACTS OF JAPAN vol. 1997, no. 12, 25. Dezember 1997 (1997-12-25) -& JP 09 221330 A (CANON INC), 26. August 1997 (1997-08-26)

## Beschreibung

Die Erfindung betrifft im weitesten Sinne ein Verfahren zum Herstellen blankgepresster Glaskörper für optische Ausrüstungen nach der Vorformtechnologie, bei der ein einziger Glasposten einer Levitations-Preform zugeführt wird, in welcher der Glasposten, ohne die Preformfläche zu berühren, zu einem Vorformling vorgeformt wird, der nach Ablauf einer definierten Zeit an eine separate Pressform übergeben wird und darin mittels eines Presswerkzeuges in die Endform verpresst wird, wobei die Übergabe des Vorformlings an die Pressform so erfolgt, dass der Vorformling im freien Fall von der Preform in die Pressform fällt. Dazu wird die Preform zur Übergabe des Glaspostens über die Pressform verfahren, in dieser Übergabeposition angehalten und nach unten vom Glasposten weggeschwenkt. Die eigentliche Erfindung betrifft eine Vorrichtung zur Durchführung des Verfahrens mit zwei Drehschalttischen, von denen der eine kreisförmig angeordnete Preformen zur Ausbildung der Vorformlinge aus einem flüssigen Glasposten aufweist, welche im unteren Bereich kleinste Öffnungen zum Einbringen eines Luftpolsters aufweisen, und der andere kreisförmig angeordnete Pressformen zum Verpressen der Vorformlinge nach Übergabe aus den Preformen aufweist.

Es ist bekannt, Glaskörper für die Herstellung optischer Ausrüstungen, wie beispielsweise Linsen, Prismen etc. durch Nachpressen von wiedererwärmten, blanken (feuerpolierten) Glasstäben in hochpolierten Formen herzustellen. Das Nachpressen ist notwendig, damit sich für den Glaskörper die endgültige genaue Oberflächenoptikqualität ergibt. Bei der Herstellung einiger Glaskörper, beispielsweise asphärischer Linsen für Autoscheinwerfer, ist es jedoch mit dem Nachpressvorgang allein noch nicht getan. Es sind zusätzlich Fräs-, Schleif-, und Poliervorgänge notwendig. So wird z. B. bei der Fertigung von blankgepressten Kondensorlinsen nur die asphärische Fläche blankgepresst und die der blanken Fläche gegenüberliegende Planfläche durch mechanische Arbeitsgänge gefräst, geschliffen und poliert.

Das manuelle Nachpressen sowie die ggf. notwendigen Zusatz-Verfahrensschritte bedingen eine zeitaufwendige und kostenträchtige Herstellungsweise. Da der Bedarf an blankgepressten Glaskörpern, insbesondere Linsen für die Autoscheinwerfer, sehr groß ist, erhebt sich die Forderung nach einer automatischen Fertigung direkt aus der flüssigen Phase des Glases, also nach einem Inline-Blankpressverfahren.

Eine derartige automatische Fertigung ist beispielsweise durch die eingangs bezeichnete Vorformtechnologie möglich, welche beispielsweise aus der DE-A-24 10 923 bekannt ist. Die Übergabe des Glaspostens aus einer Preform erfolgt gemäß dieser Druckschrift dadurch, dass der Glasposten auf eine Art Rutsche gebracht wird, entlang der der Vorformling im heißen Zustand hin zu einer Pressform geführt wird. Dies führt zu Oberflächendefekten und Formveränderungen, die heutzutage nicht mehr tolerabel sind. Die Formveränderung führt im übrigen im Endeffekt zu einer inhomogenen Temperaturverteilung. Auch dies wirkt sich im nachgeschalteten Pressvorgang negativ auf die Formgebung aus.

Gemäß der JP-A-11-157 849 ist ein gattungsgemäßes Verfahren bekannt geworden. Hier erfolgt die Übergabe des Glaspostens aus einer Preform dadurch, dass die Preform geöffnet wird und der Glasposten im freien Fall in eine Pressform fällt. Hierbei werden Oberflächendefekte und Formveränderungen vermieden. Allerdings ist nicht erkennbar, wie das Zusammenwirken der Preform und der Pressform vonstatten geht.

Weitere Verfahren auf diesem Gebiet sind bekannt aus der JP-A-06-206 730 und US-A-5 762 673.

Vor diesem Hintergrund ist es nun die Aufgabe der vorliegenden Erfindung, eine Vorrichtung anzugeben, die die Übergabe des Glaspostens von der Preform in die Pressform möglichst effektiv ermöglicht.

Gelöst wird die Aufgabe durch eine Vorrichtung mit den Merkmalen des Anspruchs 1.

Demgemäß ist vorgesehen, dass die Preformen an genanntem ersten Drehschalttisch mittels eines schaltbaren Halters befestigt sind, welche die Preformen in einer ersten Schaltstellung waagerecht halten und in einer zweiten Schaltstellung den freien Fall der Vorformlinge ermöglichen und dann Position halten.

Dabei ist vorgesehen, dass die Preform bei Ausführung der Schwenkbewegung eine Beschleunigung von mindestens 1g, also der Erdbeschleunigung, erfährt. Bildlich gesprochen muss die Preform schneller weggeklappt werden als der Glasposten auf seinem Weg im freien Fall hin zur Pressform zurücklegt. Hierdurch gelingt es, dass der Glasposten ohne Verkippen von der Preform in die Pressform gelangt.

Besonders bevorzugt ist eine Ausführungsform, bei der die Preformen an die Halter angelenkt sind und auf Betätigung eines Aktuators nach unten verschwenkbar sind. Diese Ausführungsform ermöglicht die Verfahrensvariante, bei der die Preformen vom Glasposten weggeschwenkt werden. Der Schwenkwinkel beträgt dabei wenigstens 90°.

Die Erfindung wird anhand der Zeichnungsfiguren beispielhaft näher erläutert. Hierbei zeigt:
- Fig. 1:: die prinzipielle Anordnung der zwei Drehschalttische der Vorrichtung,
- Fig. 2:: die Preform im Verhältnis zur Pressform vor dem freien Fall des Glaspostens,
- Fig. 3:: die Anordnung gemäß Fig. 2 nach dem freien Fall des Glaspostens in die Pressform.

Nachfolgend bezeichnen gleiche Bezugszeichen gleiche Teile.

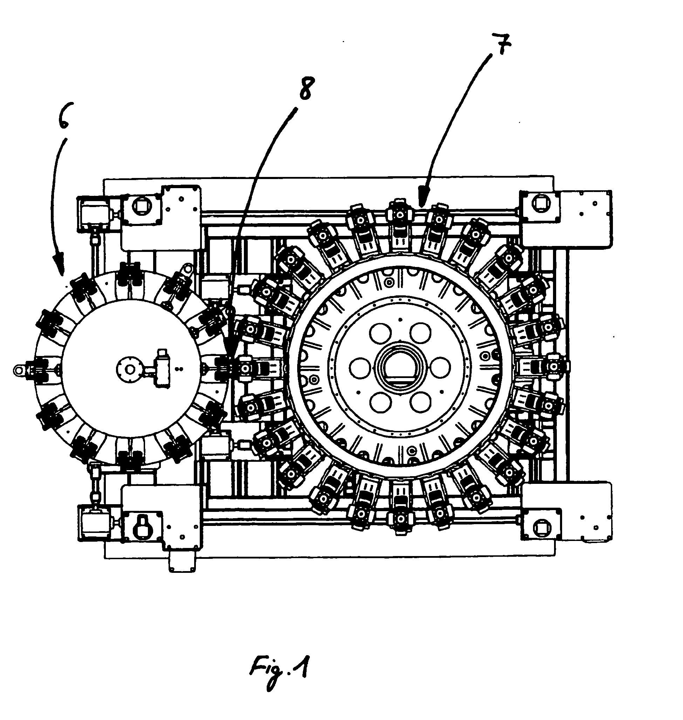

Einen ersten Überblick über die Anordnung der Aggregate vermittelt Fig. 1. Es sind zwei Drehschalttische 6 und 7 erkennbar, die miteinander wirken. Sie sind so angeordnet, dass sie in einem Übergabebereich 8 miteinander kämmen. Der Drehschalttisch 6 trägt die kreisförmig angeordneten Preformen (nicht dargestellt) zur Ausbildung der Vorformlinge. Der größere Drehschalttisch 7 hingegen trägt die kreisförmig angeordneten Pressformen (nicht dargestellt) zum Verpressen der Vorformlinge. Man erkennt, dass der Drehschalttisch 7 für die Pressformen mehr Positionen aufweist als der Drehschalttisch 6 für die Preformen. Dies ist vorliegend dadurch bedingt, dass jeder Presstempel (nicht dargestellt) jedes Presswerkzeuges seinen eigenen Antrieb hat. Dies bedeutet, dass das Presswerkzeug zugleich verfahren werden kann, während die Pressung anhält. Somit werden durch den höheren maschinellen Aufwand längere Presszeiten im Verhältnis zu den Einspeiszeiten erzielt.

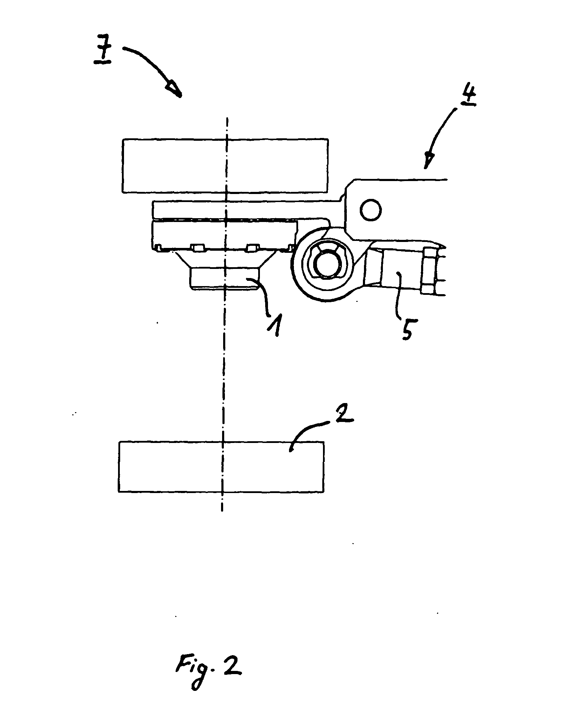

Fig. 2 zeigt nun das Zusammenwirken der Drehschalttische 6 und 7. Dargestellt in Fig. 2 ist, wie nach einem weiteren Takt der Preformer in den Bereich zwischen dem Presswerkzeug 3 und der Pressform 2 eingefahren ist. Die Preform 1 befindet sich noch in einer waagerechten Position am schaltbaren Halter 4.

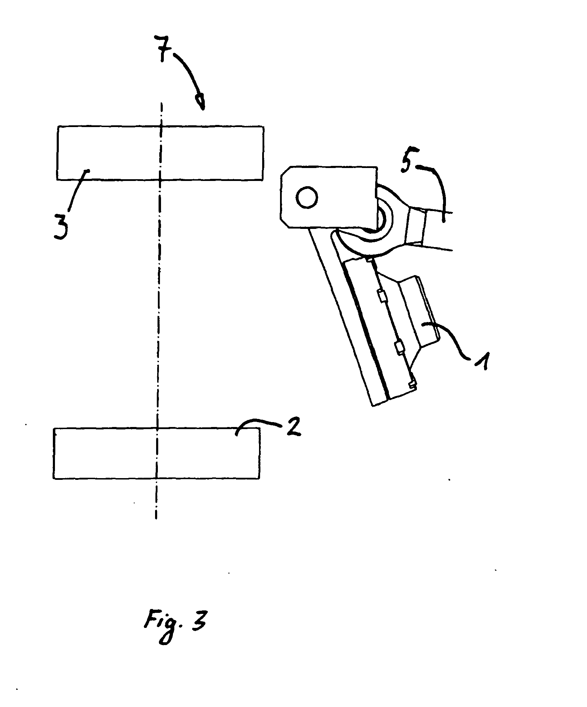

Nach einer definierten Zeitspanne wird der Aktuator 5 des schaltbaren Halters 4 betätigt, und zwar derart, dass die Preform 1 mit einer Beschleunigung, die größer ist als die Erdbeschleunigung, in die abgeschwenkte Position gebracht wird, wie sie aus Fig. 3 ersichtlich ist. Die Verschwenkbewegung veranlasst den Glasposten bzw. den Vorformling (nicht dargestellt) zum freien Fall in die Pressform 2. Sodann wird die Pressform 2 nach oben verfahren. Dabei verpresst es den Vorformling zum Endprodukt.

## Patentansprüche

1. Vorrichtung zur Durchführung eines Verfahrens zum Herstellen blankgepresster Glaskörper für optische Ausrüstungen nach der Vorformtechnologie, bei der ein flüssiger Glasposten einer Levitations-Preform (1) zugeführt wird, in welche der Glasposten, ohne die Preformfläche zu berühren, zu einem Vorformling vorgeformt wird, der nach Ablauf einer definierten Zeit an eine separate Pressform (2) übergeben wird und darin mittels eines Presswerkzeuges (3) in die Endform verpresst wird, wobei die Übergabe des Vorformlings an die Pressform (2) so erfolgt, dass der Vorformling im freien Fall von der Preform (1) in die Pressform (2) fällt, wobei die Preform (1) zur Übergabe des Glaspostens über die Pressform (2) verfahren wird, in dieser Übergabeposition angehalten und nach unten vom Glasposten weggeschwenkt wird, mit zwei Drehschalttischen (6,7), von denen der eine kreisförmig angeordnete Preformen (1) zur Ausbildung der Vorformlinge aus einem flüssigen Glasposten aufweist, welche im unteren Bereich kleinste Öffnungen zum Einbringen eines Luftpolsters aufweisen, und der andere kreisförmig angeordnete Pressformen (2) zum Verpressen der Vorformlinge nach Übergabe aus den Preformen (1) aufweist,
**dadurch gekennzeichnet,**
**dass** die Preformen (1) am ersten Drehschalttisch (6) mittels eines schaltbaren Halters (4) befestigt sind, welche die Preformen (1) in einer ersten Schaltstellung waagerecht halten und in einer zweiten Schaltstellung den freien Fall der Vorformlinge ermöglichenden Position halten.

2. Vorrichtung nach Anspruch 1, **dadurch gekennzeichnet, dass** die Preformen (1) an die Halter (4) angelenkt sind und auf Betätigung eines Aktuators (5) nach unten verschwenkbar sind.

3. Vorrichtung nach Anspruch 2, **dadurch gekennzeichnet, dass** der Schwenkwinkel wenigstens 90° beträgt.

4. Vorrichtung nach Anspruch 1 oder 2, **dadurch gekennzeichnet, dass** die Preform (1) bei Ausführung der Schwenkbewegung eine Beschleunigung von mindestens 1g erfährt.

## Claims

1. Device for carrying out a process for producing blank-pressed glass bodies for optical,equipment after the preshaping technology, in which a liquid glass gob is fed to a levitation premould (1), in the which the glass gob, without touching the premould surface, is preshaped to form a preshaped item which, after a defined time has elapsed, is transferred to a separate press mould (2), in which it is pressed into the final shape by means of a press tool (3), the transfer of the preshaped item to the press mould (2) taking place in such a way that the preshaped item drops freely from the premould (1) into the press mould (2), the premould (1) being displaced over the press mould (2) in order to transfer the glass gob, then being held in this transfer position and pivoted downwards away from the glass gob, having two carousels (6, 7), one of which has premoulds (1) arranged in a circle to form the preshaped items from a liquid glass gob, which in the lower region have extremely small openings for introducing an air cushion, and the other of which has press moulds (2) arranged in a circle for pressing the preshaped items after they have been transferred from the premoulds (1),
**characterized**
**in that** the premoulds (1) are secured to the first carousel (6) by means of a switchable holder (4), which in a first switching position holds the premoulds (1) horizontally and in a second switching position holds the premoulds (1) in a position which allows the preshaped items to drop freely.

2. Device according to Claim 1, **characterized in that** the premoulds (1) are articulatedly attached to the holders (1) and can be pivoted downwards on actuation of an actuator (5).

3. Device according to Claim 2, **characterized in that** the pivoting angle is at least 90°.

4. Apparatus according to Claim 1 or 2, **characterized in that** the premould (1) undergoes an acceleration of at least 1 g on carrying out the pivoting movement.

## Revendications

1. Dispositif de mise en oeuvre d'un procédé de fabrication de corps en verre pour des dispositifs optiques à partir d'ébauches comprimées par recours à la technologie du pré-moulage, dans lequel une paraison de verre liquide est apportée à un pré-moule à lévitation (1) dans lequel la paraison de verre, sans toucher la surface du pré-moule, est pré-moulée en une ébauche qui, après qu'une durée définie s'est écoulée, est transférée dans un moule séparé de pressage (2) pour y être pressée dans sa forme finale au moyen d'un outil de pressage (3), le transfert de l'ébauche dans le moule de pressage (2) s'effectuant en laissant tomber l'ébauche en chute libre depuis le pré-moule (1) jusque dans le moule de pressage (2), le pré-moule (1) étant déplacé au-dessus du moule de pressage (2) pour le transfert de la paraison de verre, étant arrêté dans cette position de transfert et étant éloigné de la paraison de verre en étant incliné vers le bas, le dispositif présentant deux tables (6, 7) qui peuvent tourner pas-à-pas et dont l'une présente des pré-moules (1) disposés en cercle pour former les ébauches à partir d'une paraison de verre liquide, ces pré-moules présentant dans leur partie inférieure de très petites ouvertures qui permettent d'injecter un coussin d'air, l'autre table présentant des moules de pressage (2) disposés en cercle pour le pressage des ébauches après leur transfert hors des pré-moules (1), **caractérisé en ce que**
Les pré-moules (1) prévus sur la première table (6) capable de tourner pas-à-pas sont fixés au moyen d'un support commutable (4) qui maintient horizontalement les pré-moules (1) dans une première position de commutation et les maintient dans une position qui permet la chute libre des ébauches dans une deuxième position de commutation.

2. Dispositif selon la revendication 1, **caractérisé en ce que** les pré-moules (1) sont articulés sur les supports (4) et peuvent basculer vers le bas lorsqu'un actionneur (5) est actionné.

3. Dispositif selon la revendication 2, **caractérisé en ce que** l'angle de pivotement est d'au moins 90°.

4. Dispositif selon les revendications 1 ou 2, **caractérisé en ce que** le pré-moule (1) subit une accélération d'au moins 1 g lors de l'exécution du déplacement de pivotement.
